Europäisches Patentamt

European Patent Office

Office européen des brevets

(19)

(11) Publication number: **0 063 008**

**A2**

(12)

# EUROPEAN PATENT APPLICATION

(21) Application number: **82301727.2**

(22) Date of filing: **01.04.82**

(51) Int. Cl.³: **B 62 D 53/06**
**B 60 P 1/64**

(30) Priority: **13.04.81 GB 8111675**
**09.12.81 GB 8137155**

(43) Date of publication of application:
**20.10.82 Bulletin 82/42**

(84) Designated Contracting States:
**BE FR GB LU NL**

(71) Applicant: **CRAVEN TASKER (SHEFFIELD) LIMITED**
**Staniforth Road**
**Darnall Sheffield S9 4LL(GB)**

(72) Inventor: **Mellors, Norman**
**496 Whirlowdale Road**
**Sheffield S11 9NH South Yorkshire(GB)**

(74) Representative: **Paget, Hugh Charles Edward et al,**
**MEWBURN ELLIS & CO. 2/3 Cursitor Street**
**London EC4A 1BQ(GB)**

(54) **Load-carrying road vehicle.**

(57) The invention relates to a load-carrying road vehicle of the kind devoid of an underframe and having wheels (12) of conventional size so that there is considerable ground clearance beneath the body (10).

So that an increased load-carrying capacity can be obtained by utilising the ground clearance beneath the body (10), the vehicle is provided with at least one load-carrying body or pod (16) releasably secured beneath the main box-like body (10).

FIG. 1

"Load-carrying road vehicle"

The invention relates to load-carrying road vehicles of the semi-trailer van type.

Van type semi-trailer load-carrying road vehicles are of two main kinds, that is to say a first kind having a very deep and strong underframe structure on which a body is fixed, and a second kind which is devoid of an underframe, the necessary strength being provided by the box-like vehicle body. If this second kind of vehicle is provided with wheels of conventional size there is a considerable ground clearance beneath the box-like body. Since the overall height of a road vehicle is necessarily limited, this considerable ground clearance represents a considerable loss of carrying capacity within the overall height. Consequently, various ways have previously been tried to remedy the situation. For example, a box-like vehicle body construction having a stepped floor has been used and this has necessitated the use of relatively small diameter road wheels the tyres of which very quickly wear out. A further disadvantage of this construction is that with such a stepped floor construction it is not as easy to load the vehicle body as with a construction having a flat uninterrupted floor. In another construction, the considerable ground clearance beneath a vehicle body has been used for the fitment of lockers with side opening doors, but the loading and unloading of such lockers through said side opening doors has not always been very convenient.

The invention as claimed is intended to provide a remedy. It solves the problem of how to increase the load-carrying capacity of a semi-trailer van type road vehicle without resorting to a stepped floor construction or the fitment of lockers with side opening doors.

The advantages offered by the invention are mainly that the increased load-carrying capacity is obtained by utilising the considerable ground clearance beneath a flat floored vehicle having wheels of conventional size. The advantages of a flat floored vehicle are therefore retained, that is to say the advantages of easy loading and unloading and in addition the additional load can be kept quite separate from the load in the original load-carrying space of the vehicle.

One way of carrying out the invention is described in detail below with reference to drawings which illustrate only one specific embodiment, of which:-

Figure 1 is a perspective view on a van type semi-trailer load-carrying road vehicle provided with an auxiliary load-carrying body or pod embodying the invention,

Figure 2 is a perspective view from above of the auxiliary body or pod, showing the provision of releasably connectable jacking means thereto,

Figure 3 is a schematic view showing the auxiliary body or pod being connected beneath the main box-like body of the load-carrying vehicle,

Figure 4 is a scrap part cut away perspective view of a so-called "Twistlock" fastening by means of which the auxiliary body or pod is connected beneath the main box-like body of the vehicle,

Figure 5 is a perspective view illustrating a possible modification of the auxiliary body or pod,

Figure 6 is a scrap sectional view on the line 6-6 in Figure 5,

Figure 7 is a partly cut-away perspective view of a rear corner of the auxiliary body or pod, and

Figure 8 is a perspective view in the direction of arrow 8 in Figure 5.

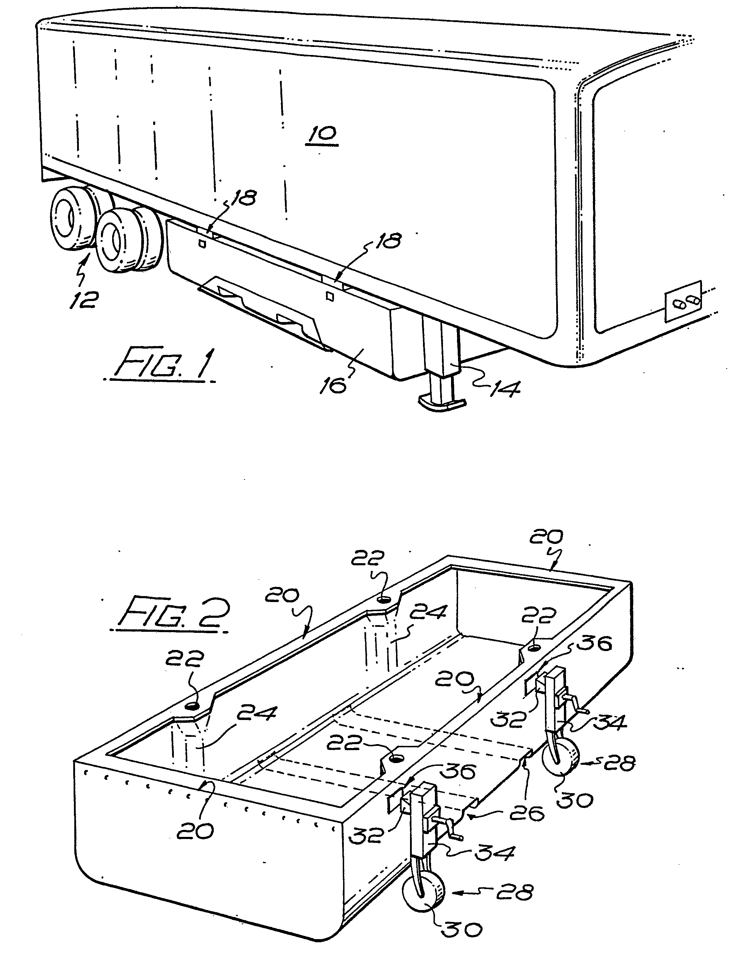

Referring now to Figure 1 of the drawings, the van type semi-trailer load-carrying road vehicle there illustrated is devoid of an underframe, the necessary strength being provided by the box-like vehicle body 10 to which the wheel set generally indicated 12 at the rear of the vehicle is directly connected. Also connected directly to the box-like body 10, at the front of the vehicle, are the necessary parts (not shown) of the so-called fifth wheel connection by means of which a tractor unit can be coupled to the vehicle and retractable ground engaging landing legs 14, only one of which is visible in Figure 1, by means of which the front end of the vehicle is supported when not connected to a tractor unit.

The road wheels located near the rear of the vehicle are of convention size. Consequently, the box-like vehicle body is carried at a substantial height from the road surface, the ground clearance beneath the underside of the body at the front end of the vehicle and immediately in front of and behind the road wheels being in the region of 4 feet. However, it will be seen that the vehicle illustrated in Figure 1 is provided with an auxiliary load-carrying body or pod 16, this having been releasably secured beneath the main box-like body 10 by four so-called "Twistlock" fastenings 18 only two of which are visible in Figure 1, two similar fastenings being located at the opposite side of the vehicle. This results in a ground clearance beneath the auxiliary load-carrying body or pod of somewhere in the region of 12" to 15". The width of the auxiliary body or pod is substantially the same as that of the main body of the vehicle, that is to say in the region of 8 feet. The length of the auxiliary body or pod depends of course on the available space ahead of the road wheel set 12 but may for example be in the region of 15 feet.

Referring now in particular to Figure 2, the auxiliary load-carrying body or pod is of open top fabricated construction, the side walls and end walls being inwardly flanged along their upper edges to form bearing surfaces 20 which, in use of the auxiliary body or pod, can abut against the underside of the "Twistlock" fastenings 18. In regions along the opposite side walls where holes 22 are provided in the inwardly turned flanges for, or forming part of, the "Twistlock" fastenings, said flanges are locally widened and the side walls are provided with reinforcement 24. The floor is of reinforced construction, specifically so that the weight of the fully loaded auxiliary body or pod, at least at one side thereof, can be supported on the forwardly extending load-carrying tines of a fork lift truck. For this reason also, the auxiliary body or pod is provided with a pair of transverse slots 26 constituting so-called fork pockets extending inwardly across its underside for

the reception of such load-carrying tines, the slots being spaced apart, midway along the length of the body or pod, at the conventional spacing of fork lift truck tines.

At one side of the auxiliary load-carrying body or pod there is provision for the releasable connection of jacking means constituted by a pair of manually operable jacks 28, each of which has a small castor wheel 30 at its foot. The releasable connection for each jack is constituted by a pair of upwardly turned plug elements 32 formed on an upstanding body part 34 of the jack, and apertures 36 in the side of the auxiliary body or pod in which said plug elements can be engaged.

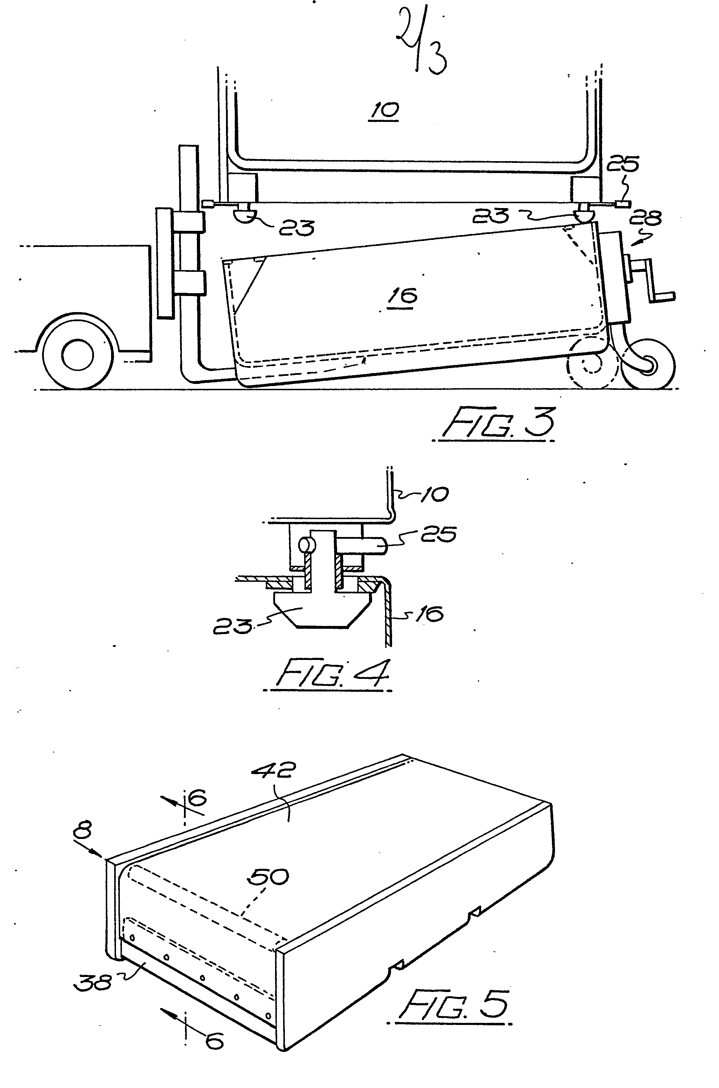

Referring now to Figure 3 of the drawings, the arrangement is such that when it is desired to connect the auxiliary body or pod beneath the main box-like body of the vehicle, this can be effected with the use of a conventional fork-lift truck. As indicated in Figure 3, when one side of the auxiliary body or pod has been slightly raised on the jacks 28 and when the weight of the other side has been supported by a conventional fork lift truck, the body or pod can be wheeled into position beneath the box-like body 10 of the vehicle. (Although not illustrated in the drawings the main box-like body has been provided with guides extending transversely across its underside to facilitate the proper alignment of the auxiliary load-carrying body or pod with the "Twistlock" fastenings). The jack can then be operated to bring into engagement the parts of the "Twistlock" fastenings at that side of the vehicle. (The parts of the "Twistlock" fastenings carried by the main box-like body 10 are the rotatable non-circular head portions 23 which project downwards and with which the apertures 22 in the top face of the auxiliary body or pod can be engaged). The fastenings can be secured in normal manner by means of the locking levers 25 forming part of said fastenings. The other side of the auxiliary body or pod can then be lifted by the fork lift truck and the "Twistlock" fastenings at that side of the vehicle made secure. When the fork lift truck has subsequently been backed away, and the jacks 28 removed and placed in the vehicle cab, the vehicle can be driven away with the auxiliary body or pod safely slung beneath the main box-like body. (Although not illustrated in the drawings, safety catches have been associated with the "Twistlock" fastenings to guard against their inadvertent release).

It will be understood that not only does the use of an auxiliary body or pod in the manner described represent a significant extra carrying capacity of the vehicle without increase of its overall dimensions (for example, typically, the auxiliary body or pod may have in the region of 10% of the volume of the box-like body beneath which it is carried) but that various other advantages follow from such use. For example, the use of such an auxiliary body or pod is useful if the part of the total load which is carried is to be left at a particular destination and the main part of the load is to be taken elsewhere. In some circumstances it may be particularly advantageous that the part of the load which is to be carried by the auxiliary load-carrying body or pod can be kept quite separate from the part of the load carried in the main body, for example if the latter is to carry foodstuffs and the auxiliary body or pod is to carry engineering products such as loose castings. Depending of course upon the load which is to be transported it may be useful if a loaded auxiliary body or pod can be transported on an outwards journey to be replaced by another auxiliary body or pod for the return journey. A further significant advantage is that the use of such an auxiliary body or pod provides a useful safety feature against pedestrians, cyclists and small passanger cars falling under or under-running the main box-like vehicle body. Furthermore, the stability of the vehicle is significantly improved by the fact that its centre of gravity is lowered by the attachment of the auxiliary load-carrying body or pod, particularly if the latter is to carry relatively heavy articles such as engineering parts and the main body is to carry a high volume, low weight load such as some foodstuffs.

Various modifications may be made. For example, instead of a single auxiliary body or pod there could be provided two or more appropriately shorter ones releasably secured side by side beneath the main box-like vehicle body. Furthermore, although the jacking means described have been found to work quite well, it is quite possible that they could be replaced by suitable hoisting means carried by the main body of the vehicle, that is to say for example by wire rope or chain-type hoisting mechanism. (However, in this case it will be understood that a removable wheel or wheels will still be required to enable the auxiliary body or pod to be wheeled into position beneath the main box-like body of the vehicle). On the other hand, provision may be made for the releasable connection of jacks such as those illustrated at either side of the auxiliary body or pod so that the fork lift truck can be used at either side of the vehicle. It will be noted that the "Twistlock" fastenings in the illustrated arrangement are located each some small distance from an end of the auxiliary body or pod, this being thought to be preferable to reduce bending stress in the side walls. However, if preferred, the fastenings could be located at the corners, particularly in the case of a relatively short auxiliary body or pod.

The or each auxiliary body or pod may be made of any suitable material, but will generally be of fabricated construction and capable of being stacked in a laden or unladen condition. It will also be understood that depending upon the load which is to be carried by the auxiliary body or pod, the latter may be provided with a lid or cover to guard against the ingress of rainwater and road film and/or to guard against the contents being stolen when the loaded body or pod has been detached from the vehicle. Such a lid or cover will of course be of relatively lightweight construction and if weather protection is its main function may be made of a synthetic plastics material. For ease of handling, the lid or cover may be provided in two or more separate sections, or may be made of a flexible material.

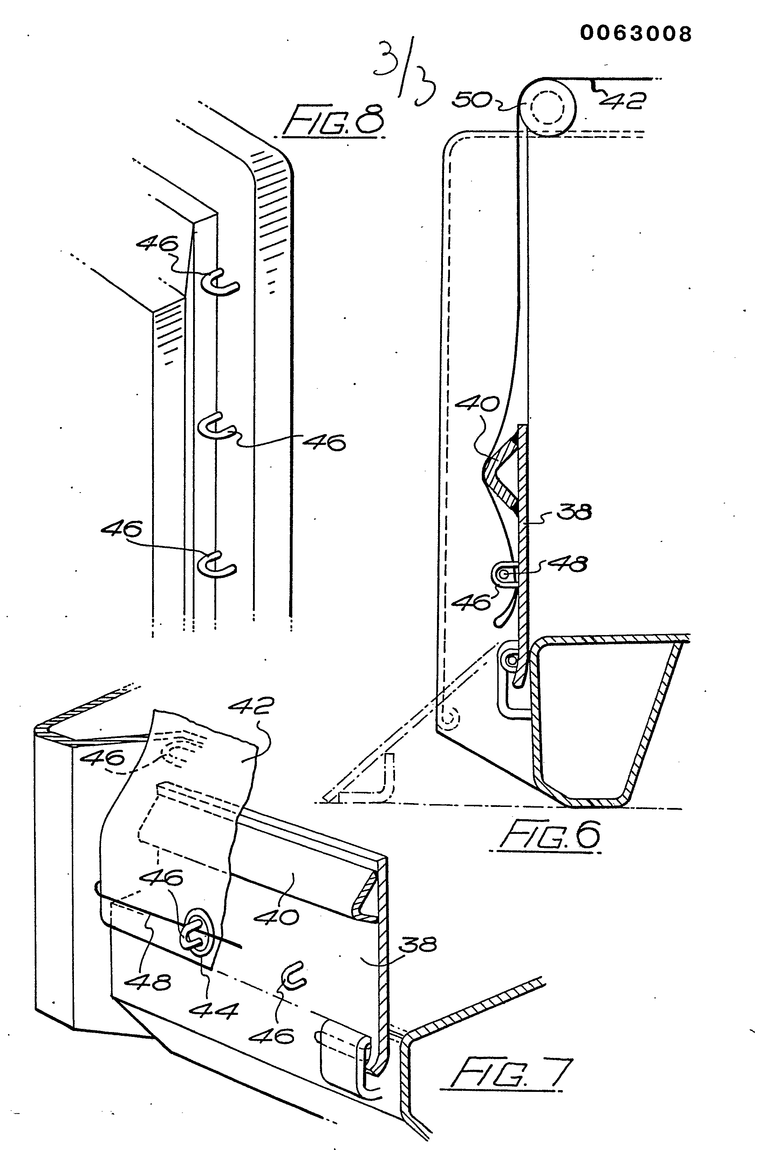

However, the or each auxiliary load-carrying body or pod need not necessarily be constructed as illustrated in the drawings. For example, depending upon the requirements of the vehicle operator, at least some of a number of auxiliary bodies or pods may be provided with at least one openable door in an end wall or side wall for the loading or unloading of goods. In Figures 5 to 8 there is illustrated a modified auxiliary load-carrying body or pod which has an end wall constituted in part by a drop down door 38, that is to say a door hinged along or adjacent its lower edge so as to be capable of forming a ramp extending from ground level to the interior of the body as shown in chain-dotted lines in Figure 6. On what is its external surface when closed, the drop down door is formed near its free edge with a formation 40 which constitutes a ground engaging element when the door is open.

The auxiliary load-carrying body or pod in this case is provided with a cover 42 made of a flexible sheet material, and provided with a series of metal eyelets 44 spaced apart along its marginal edges. When the cover is to be fitted in position, the metal eyelets are passed over respective metal rings 46 which are secured along upper edges of the fixed walls of the body or pod and across a lower part of the drop down door. The metal eyelets can subsequently be made captive on the rings 46 by a sheet fastening rope 48 which can be passed through the projecting portions of the metal rings (and of course the closed body or pod can then be sealed by Customs Officers in the way in which sheeted vehicles are conventionally sealed, that is to say by a seal applied to the ends of the sheet fastening rope). A removable shaft 50 extends across the body above the closed position of the door 38, the arrangement being such that the flexible cover can extend the full length of the body or pod before extending downwards into overlapping relation with the drop down door.

It will be seen in Figures 6 and 7 in particular that the side walls of the auxiliary body or pod extend some distance rearwardly of the closed position of the drop down door and of the removable shaft 50. Consequently, the door and the rearward part of the flexible cover are protected from damage as the body or pod is engaged with the guides extending transversely across the underside of the main box-like body and moved into position prior to being secured to the main box-like body by the "Twistlock" fastenings.

A further possibility is that the auxiliary load-carrying body or pod, or at least some of a number of such bodies or pods provided, mayhave provision for being mounted as the load-carrying body on a rigid frame of a smaller vehicle. For example, if the transverse bearers of the rigid frame of such a smaller vehicle are arranged at the conventional spacing of fork lift truck tines, the fork pockets of the auxiliary load-carrying body or pod can be engaged with them. Alternatively, of course, the auxiliary body or pod could be provided with further transverse slots for this purpose, or with runners or whatever other fitmens are required in any particular circumstances. Whichever of these arrangement is adopted, it will be useful for the auxiliary body or pod to be provided with a drop down door in what is to be its rear wall.

Thus it will be understood that the modified auxiliary body or pod is a considerable improvement on the body or pod originally described, in particular because it can with much greater facility be loaded with the goods which it is to carry, or be unloaded, for example by the use of a fork lift truck.

CLAIMS:

1.    A van type semi-trailer load-carrying road vehicle of the kind devoid of an underframe provided with means whereby at least one auxiliary load-carrying body or pod (16) can be releasably secured beneath the main box-like body (10).

2.    A van type semi-trailer load-carrying road vehicle according to claim 1, in which the means whereby at least one auxiliary load-carrying body or pod (16) can be releasably secured beneath the main box-like body (10) are constituted by so-called "Twistlock" fastenings (18) of the kind generally used for securing "containers" to underframed vehicle bodies.

3.    A van type semi-trailer load-carrying road vehicle according to either one of claims 1 and 2, provided with guides extending transversely across the underside of the main box-like body to facilitate the alignment of the auxiliary load-carrying body or pod (16) with the fastening means.

4.    In combination, a van type semi-trailer load-carrying road vehicle according to any one of the preceding claims, and at least one auxiliary load-carrying body or pod capable of being releasably secured beneath the main box-like body (10) of the vehicle.

5.    The combination claimed in claim 4, in which the means for releasably securing the auxiliary load-carrying body or pod (16) beneath the box-like body (10) are constituted by so-called "Twistlock" fastenings (18) of the kind generally used for securing "containers" to underframed vehicle bodies, each "Twistlock" fastening (18) including a rotatable non-circular head portion (23) depending from the underside of the box-like body (10) and a non-circular aperture (22) in a top surface (20) of a side wall of the auxiliary body or pod (16) in which the head portion (23) can be inserted and turned to achieve a clamping action.

6.      The combination claimed in claim 5, in which safety catches are associated with the "Twistlock" fastenings to guard against their inadvertent release.

7.      The combination claimed in any one of claims 4 to 6, in which the van type semi-trailer load-carrying vehicle is provided with guides extending transversely across the underside of the main box-like body (10) to facilitate the alignment of the auxiliary load-carrying body or pod (16) with the fastening means.

8.      The combination claimed in any one of claims 4 to 7, in which at least at one side of the or each auxiliary load-carrying body or pod (16) there is provision for the releasable connection of jacking or hoisting means for elevating that side of said body or pod (16) into position beneath the main box-like body (10).

9.      The combination claimed in claim 8, in which jacking means (28), provided with ground engaging castor wheels (30) by means of which the jacked up auxiliary body or pod (16) can be adjusted in position beneath the main body (10) prior to the engagement of the "Twistlock" fastenings (18).

10. The combination claimed in either one of claims 8 and 9, in which a releasable connection for the or each jacking means (28) is constituted by a positively engaging plug element (32) on the jack and an aperture (36) in the side of the auxiliary body or pod (16) in which said plug element can be engaged.

11. The combination claimed in any one of claims 8 to 10, in which the or each load-carrying body or pod is provided with transverse slots (26) constituting so-called fork pockets extending inwardly across its underside from at least one side of said body or pod (that is to say from at least the side opposite the at least one side having provision for the releasable connection of jacking or hoisting means) for the reception of the forwardly extending load-carrying tines of a fork lift truck.

12. The combination claimed in any one of claims 4 to 11, in which an end wall of the auxiliary load-carrying body or pod (16) which when the latter is in use will be facing to the rear of the vehicle is openable to facilitate the loading of the auxiliary body or pod (16) with the goods which it is to carry and to facilitate its unloading.

13. The combination claimed in claim 12, in which the openable rear wall of the load-carrying body or pod is constituted at least in part by a drop down door (38) capable of forming a ramp extending from ground level to the interior of the body.

14.      The combination claimed in claim 12 or claim 13, in which the auxiliary load-carrying body or pod is provided with a cover (42) made of a flexible sheet material and provided with a series of metal eyelets (44) spaced apart along its marginal edges, the eyelets being capable of being passed over respective metal rings (46) secured along upper edges of the fixed walls of the auxiliary body or pod (16) and along the drop down door (38) so that a sheet-fastening rope (48) can be passed through the projecting portions of the metal rings (46).

15.      The combination claimed in any one of claims 12 to 14, in which the drop down door (38) constitutes only a lower part of the openable rear wall of the auxiliary body or pod, the latter being provided with a removable shaft (50) extending across the body above the door (38) and around which the flexible material can extend.

0063008

FIG. 1

FIG. 2

10

25

23

23

28

16

*FIG. 3*

10

25

23

16

*FIG. 4*

42

6

8

50

38

6

*FIG. 5*

0063008

3/3

FIG.8

FIG.6

FIG.7